# FASCICULE DE BREVET EUROPEEN

(11) **EP 2 695 229 B1**
(45) Date de publication et mention de la délivrance du brevet: **06.05.2015**
(21) Numéro de dépôt: 12711888.3
(22) Date de dépôt: 03.04.2012
(51) Int. Cl.: H01M 8/02, H01M 8/04, H01M 8/10

(54) **PILE A COMBUSTIBLE A ENCOMBREMENT REDUIT**
KOMPAKTE BRENNSTOFFZELLE
COMPACT FUEL CELL

(30) Priorité: 05.04.2011 FR 1152932
(43) Date de publication de la demande: 12.02.2014
(73) Titulaire: Commissariat à l'Énergie Atomique et aux Énergies Alternatives, 75015 Paris (FR)
(72) Inventeur: DROUHAULT, Delphine, F-73000 BARBERAZ (FR); NIVELON, Pierre, F-38660 Saint Hilaire du Touvet (FR)
(74) Mandataire: Ilgart, Jean-Christophe
(86) Numéro de dépôt international: PCT/EP2012/056085
(87) Numéro de publication internationale: WO 2012/136662

(56) Documents cités:
- JP-A- 2002 298 898
- JP-A- 2003 031 246
- US-A1- 2005 282 060

## Description

### DOMAINE TECHNIQUE ET ART ANTÉRIEUR

La présente invention se rapporte à une pile à combustible à encombrement réduit.

Une pile à combustible, pour délivrer de l'électricité, est alimentée en gaz carburant, par exemple de l'hydrogène dans le cas d'une pile de type pile à combustible à membrane échangeuse de protons (PEMFC pour « Proton Exchange Membrane Fuel Cell »), et en gaz comburant, par exemple de l'air ou de l'oxygène. Le fonctionnement de la pile à combustible a également pour effet de produire de l'énergie thermique.

Une pile à combustible comporte un empilement de cellules électrochimiques, chaque cellule comporte une anode et une cathode. Les cellules sont maintenues en compression les unes contre les autres par des plaques terminales reliées par des tirants

Un circuit est prévu pour alimenter les cellules en gaz réactifs. Ces deux gaz réactifs doivent être amenés à la pile dans des conditions de température, pression et humidité définies. La pile comporte donc des dispositifs permettant de réguler le gaz comburant en pression, en température, et en humidité et des dispositifs permettant de réguler en pression, en température, le gaz carburant. Généralement, le taux d'humidité du gaz comburant est régulé par un échangeur de type air-air. Un dispositif de chauffage est prévu pour chauffer l'hydrogène avant son entrée dans les cellules.

Par ailleurs, le rendement électrochimique de la pile est dépendant de la température au sein de la pile et ceci du fait de la nature des matériaux utilisés. Par conséquent, cette température doit être contrôlée afin d'obtenir un rendement le plus élevé possible. En effet, si la température de fonctionnement est trop basse, on ne peut atteindre le meilleur rendement de fonctionnement de la pile à combustible, et si la pile subit une élévation de température trop importante, les matériaux constituant la pile peuvent être endommagés. La plage optimale de température est 65°C à 75°C.

Comme expliqué précédemment, la pile génère de la chaleur lors de son fonctionnement. Cette chaleur doit généralement être évacuée pour limiter l'élévation de température au sein de la pile. A cet effet, une circulation d'un fluide caloporteur à l'intérieur des cellules est généralement prévue, le débit et la température du caloporteur sont régulés.

En outre, le caloporteur en circulant dans la pile est directement en contact avec les plaques bipolaires, la conductivité électrique du caloporteur est alors contrôlée pour rester inférieure à un certain seuil afin de préserver le rendement électrique de la pile. Pour cela, la conductivité électrique du caloporteur est limitée à une valeur suffisamment faible. Par exemple, on utilise de l'eau déionisée comme caloporteur. Afin de limiter sa conductivité électrique, des résines de régénération de l'eau déionisée sont disposées dans le circuit de refroidissement. Il est à noter que la température maximale d'utilisation des résines régénérantes est de l'ordre de 50°C.

Ces différents éléments sont disposés dans la périphérie de l'empilement des cellules et sont reliés entre eux et à celui-ci par des conduits et des vannes. L'encombrement des piles est alors très important.

Or il est rappelé que ce type de pile est notamment destiné à être embarqué dans des véhicules comme source d'énergie de propulsion. Par conséquent, son encombrement est un point important.

Le document JP 2002 298898 décrit une pile à combustible comportant un empilement de cellules entre deux plaques d'extrémité et une chambre de chauffage entre une plaque d'extrémité et l'empilement et séparée de l'empilement par une plaque de diffusion de chaleur. Du gaz récupéré traverse la chambre de chauffage avant de circuler dans les cellules.

### EXPOSÉ DE L'INVENTION

C'est par conséquent un but de la présente invention d'offrir une pile à combustible équipée d'un système de gestion des fluides d'encombrement réduit par rapport aux ensembles de l'état de la technique.

Le but énoncé ci-dessus est atteint par une pile à combustible comportant un empilement de cellules disposé entre deux plaques terminales reliées rigidement l'une à l'autre et comportant un boitier rapporté sur l'une plaques terminales dans lequel sont logés le dispositif humidificateur et le dispositif de réchauffage, ledit boîtier étant branché directement sur le circuit de refroidissement en sortie des cellules, le dispositif humidificateur et le dispositif de réchauffage baignant alors dans le caloporteur; l'humidificateur étant un humidificateur eau-air et le dispositif de réchauffage utilisant la chaleur évacuée par de le caloporteur de la pile.

En d'autres termes, on utilise le caloporteur comme moyen d'humidification et de réchauffage des gaz réactifs, celui-ci remplit un réservoir disposé directement sur une des plaques terminales dans lequel débouche le circuit de refroidissement après avoir traversé l'empilement de cellules. Le nombre de dispositifs distincts et, de ce fait, les connexions et leur longueur sont réduits. L'encombrement est donc diminué.

Avantageusement, un dispositif échangeur d'ions est prévu également sur la plaque terminale au plus près du boîtier avec lequel il est connecté pour déioniser le fluide caloporteur sortant des cellules.

Par exemple, le dispositif échangeur d'ions est formé par des résines échangeuses d'ions. Avantageusement, une vanne thermostatique est prévue entre le boîtier et le dispositif échangeur d'ions pour ne permettre la circulation dans le dispositif échangeur d'ions que lorsque la température du caloporteur est inférieure à la température seuil.

La présente invention a alors pour objet une pile à combustible comportant un empilement de cellules électrochimiques et des première et deuxième plaques d'extrémité appliquant un effort de serrage sur les cellules électrochimiques, un système de gestion thermique formé par un circuit de circulation d'un fluide caloporteur dans l'empilement et un circuit de circulation du caloporteur à l'extérieur de l'empilement, un circuit d'alimentation en gaz carburant des cellules et un circuit d'alimentation en gaz comburant des cellules, des moyens de chauffages des gaz carburant et comburant avant leur injection dans les cellules et des moyens d'humification du gaz comburant avant son injection dans les cellules, dans laquelle la pile comporte un boîtier, dit boîtier principal, monté sur la première plaque d'extrémité et formant une volume étanche en aval du circuit de circulation intérieur du caloporteur dans l'empilement et dans lequel débouche le circuit de circulation intérieur du caloporteur, ledit volume étant destiné à être rempli au moins partiellement de caloporteur sortant de l'empilement, dans laquelle les circuits d'alimentation en gaz comburant et en gaz carburant traversent le volume étanche et sont destinés à être immergés dans le caloporteur de sorte à échanger de la chaleur avec celui-ci et dans laquelle une portion au moins du circuit d'alimentation en gaz comburant destiné à être immergée dans le caloporteur est apte à permettre un transfert de l'eau contenue dans le caloporteur de l'extérieur du circuit d'alimentation en gaz comburant vers l'intérieur dudit circuit afin d'humidifier le gaz comburant.

De préférence, le circuit d'alimentation en gaz comburant comporte une portion en ionomère conducteur de protons, par exemple en Nafion®, pour permettre le passage de l'eau vers l'intérieur de ladite portion

Une portion au moins du circuit d'alimentation en gaz carburant destinée à être immergée dans le caloporteur présente avantageusement un matériau offrant une bonne conductivité thermique, par exemple est en acier inoxydable.

Le circuit d'alimentation en gaz carburant peut également comporter une portion en ionomère conducteur de protons, par exemple en Nafion®, pour permettre le passage de l'eau vers l'intérieur de ladite portion.

De préférence, les portions des circuits d'alimentation en gaz carburant et comburant destinées à être immergée dans le caloporteur comportent un faisceau de tubes connectés en parallèles afin d'augmenter les échanges avec le caloporteur.

Le volume étanche peut être rempli partiellement afin de ménager un vase d'expansion.

La pile comporte de préférence des moyens de réduction de la conductivité électrique du caloporteur.

La pile peut alors comporter un boîtier additionnel monté sur ladite première plaque d'extrémité à proximité du boîtier principal, dans lequel sont disposés les moyens de réduction de la conductivité électrique, les moyens de réduction de la conductivité électrique étant connectés au volume intérieur de sorte à permettre la circulation du caloporteur dans les moyens de réduction de la conductivité électrique.

Par exemple, les moyens de réduction de la conductivité électrique sont formés par des résines de régénération, la pile comporte alors une vanne, commandant l'écoulement du caloporteur entre le boîtier principal et les résines de régénération en fonction de la température du caloporteur, la vanne thermostatique interrompant la communication pour une température supérieure à environ 50°C. La vanne est avantageusement une vanne thermostatique

La pile comporte également avantageusement des moyens de chauffage du caloporteur disposés dans le boîtier principal, par exemple formés par une résistance électrique.

Le circuit extérieur peut comporter un premier sous-circuit muni d'un échangeur thermique et un deuxième sous-circuit connecté directement à l'entrée du circuit intérieur, un dispositif pour commander la circulation du fluide caloporteur dans l'un et/ou l'autre des sous-circuits en fonction de la température dudit fluide à la sortie du circuit intérieur.

De préférence, le dispositif de commande est une vanne thermostatique trois voies.

De manière avantageuse, le dispositif de commande est intégré entre le boîtier principal et le boîtier additionnel de sorte que le boîtier additionnel forme une partie du deuxième sous-circuit.

Dans une réalisation très avantageuse, également, la pile à combustible comporte uniquement deux sorties pour le caloporteur, une sortie formée dans une paroi du boîtier principal vers le premier sous-circuit et une sortie dans une paroi du boîtier additionnel vers le deuxième sous-circuit.

Le boîtier principal peut comporter des moyens de mesure de la température du caloporteur et/ou des moyens de mesure de la conductivité électrique du caloporteur et/ou des moyens de contrôle du niveau de remplissage du volume étanche en caloporteur.

Le boîtier principal peut comporter par exemple dans une zone supérieure un orifice de remplissage obturé par un bouchon, avantageusement un orifice de dégazage et/ou une soupape de surpression.

L'alimentation en gaz carburant et l'alimentation en gaz comburant des cellules se font, par exemple, à travers la première plaque d'extrémité au moyen des tuyaux entre le circuit d'alimentation en gaz carburant et le circuit d'alimentation en gaz comburant et une face latérale de le première plaque d'extrémité.

Le caloporteur est avantageusement de l'eau déionisée.

La pile à combustible est par exemple du type à membrane échangeuses de protons, le gaz carburant étant de l'hydrogène et le gaz comburant étant de l'oxygène.

### BRÈVE DESCRIPTION DES DESSINS

La présente invention sera mieux comprise à l'aide de la description qui va suivre et des dessins en annexes sur lesquels:
- la figure 1A est une représentation schématique d'un exemple de réalisation d'une pile à combustible selon la présente invention,
- la figure 1B est une vue en coupe de la figure 1A suivant le plan A-A,
- la figure 2 est une vue en perspective d'un exemple de réalisation d'une pile à combustible selon la présente invention,
- la figure 3 est une vue agrandie d'un détail de la figure 2,
- la figure 4 est une vue en perspective d'une face opposée de la pile à combustible de la figure 3,
- la figure 5 est une vue de dessus de la pile de la figure 2.

### EXPOSÉ DÉTAILLÉ DE MODES DE RÉALISATION PARTICULIERS

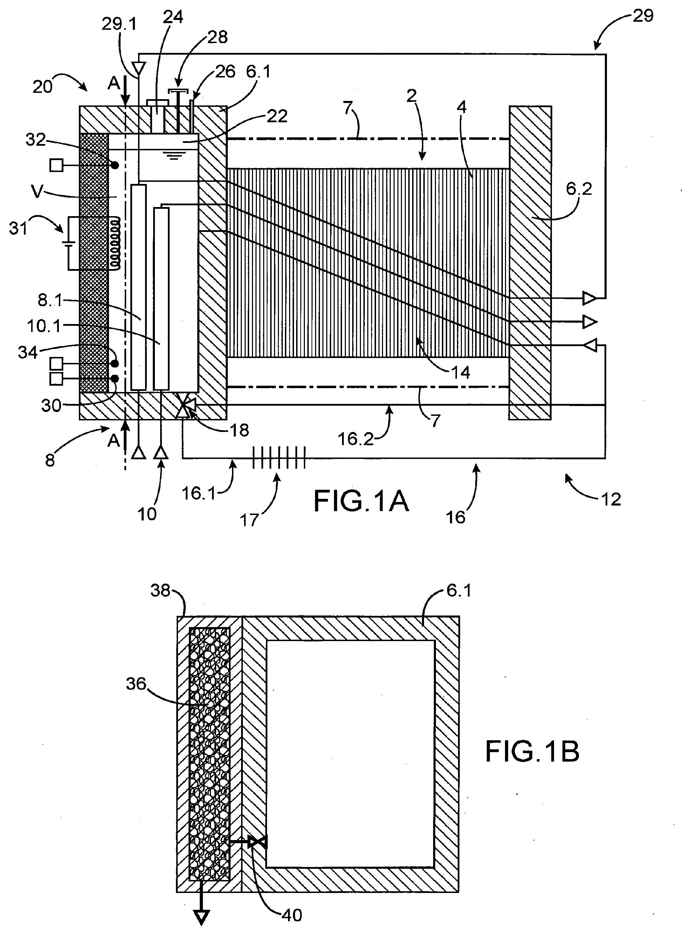

Sur la figure 1A, on peut voir une représentation schématique d'un exemple de réalisation d'une pile à combustible selon la présente invention.

Dans la description qui va suivre, nous décrirons en particulier une pile à combustible à membrane échangeuses de protons ou pile PEMFC ("Polymer Exchange Membrane Fuel Cell" en anglais). Le gaz carburant est alors de l'hydrogène et le gaz comburant est l'air ou l'oxygène. Cependant cette description n'est en aucun cas limitative et l'invention s'applique à tout type de pile à combustible.

La pile à combustible comporte un empilement 2 de cellules électrochimiques 4 composées de plaques bipolaires et de membranes échangeuses d'ions disposées en alternance, et deux plaques d'extrémité 6.1, 6.2 de part et d'autre de l'empilement. Les plaques d'extrémité 6.1, 6.2 sont reliées par des tirants 7 et exercent un effort de compression sur l'empilement 2 pour assurer une conduction électrique uniformément répartie sur toute la surface des éléments composant les cellules.

La pile comporte un circuit d'alimentation des cellules en hydrogène 8 et un circuit d'alimentation des cellules en air ou en oxygène 10. A des fins de simplicité nous ne mentionnerons que l'air comme gaz comburant.

Les circuits d'alimentation 8 et 10 traversent directement les cellules pour les alimenter.

La pile comporte également un système de gestion thermique 12 formé par un circuit de circulation 14 d'un fluide caloporteur au sein de l'empilement afin d'échanger de la chaleur avec les cellules, et un circuit de circulation 16 disposé à l'extérieur de l'empilement. Le caloporteur utilisé peut être de l'eau déionisée.

Le circuit de circulation extérieur 16 comporte deux sous-circuits 16.1, 16.2, l'un 16.1 est destiné à extraire la chaleur emmagasinée lors de la traversée de l'empilement avant de réinjecter le caloporteur dans l'empilement via le circuit intérieur 14 et est équipé à cet effet d'un échangeur thermique 17; l'autre sous-circuit 16.2 est destiné à réinjecter directement le caloporteur sortant de l'empilement dans le circuit de circulation intérieur 14. Des moyens de sélection 18 de l'écoulement dans l'un ou l'autre des sous-circuits 16.1, 16.2 sont prévus en amont, avantageusement il s'agit d'une vanne thermostatique trois voies qui détermine la circulation du caloporteur dans l'un ou l'autre des sous-circuits en fonction de la température du caloporteur en sortie de l'empilement. Une pompe de circulation (non représentée) est prévue dans le circuit extérieur 16 pour assurer la circulation du caloporteur dans l'empilement.

La pile comporte un boîtier 20, dit boîtier principal, monté sur l'une 6.1 des plaques terminales, délimitant un volume étanche V dans lequel débouche une extrémité aval du circuit intérieur 14 du circuit d'échange thermique. Ce boîtier 20 est en fonctionnement normal au moins partiellement rempli de fluide caloporteur.

La connexion entre le circuit intérieur 14 et le circuit extérieur 16 se fait à travers l'une des parois du boîtier principal 20, la vanne thermostatique trois voies 18 est alors montée dans la paroi.

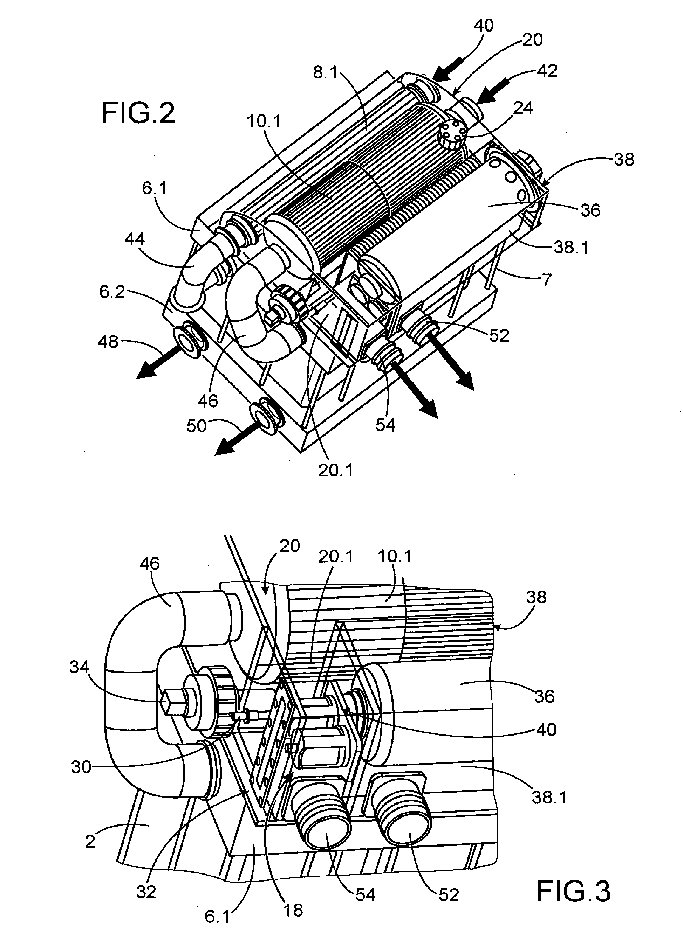

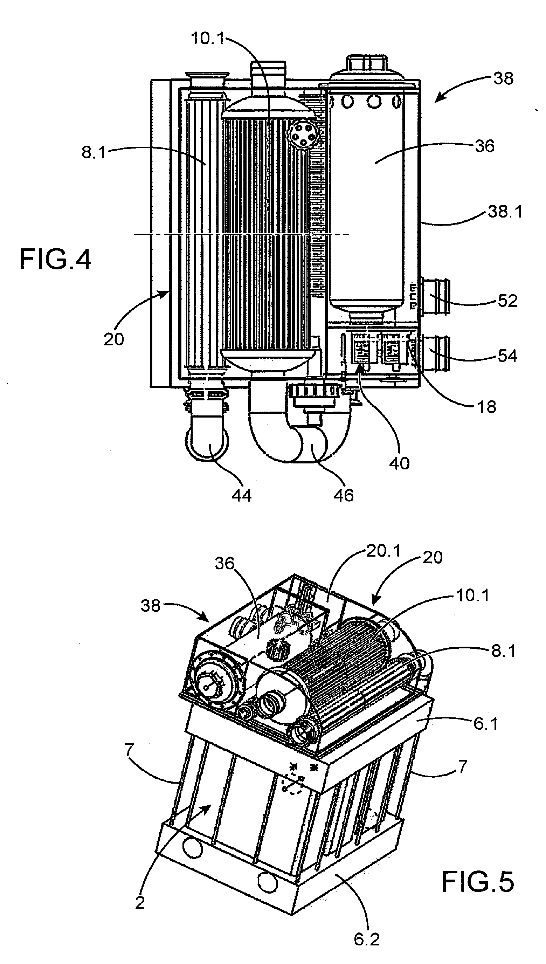

Le circuit d'alimentation en hydrogène 8 traverse le volume étanche V de sorte à baigner dans le caloporteur. La partie 8.1 du circuit d'alimentation 8 située dans le boîtier est située en amont de l'empilement, dans le sens de circulation du caloporteur, et est telle qu'elle facilite les échanges thermiques entre le caloporteur et l'hydrogène, afin de réchauffer l'hydrogène avant son injection dans les cellules. De préférence, cette partie 8.1 est formée d'un faisceau de tubes connectés en parallèle, comme on peut le voir sur la figure 2 ou la figure 5. De préférence, les tubes sont réalisés en un matériau présentant une bonne conductivité thermique, par exemple en acier inox, par exemple en acier inox 316L dont le coût de revient est réduit et est de mise en application aisée.

En variante, dans le cas où une humidification de l'hydrogène, et plus généralement du gaz carburant, est recherché on peut envisager de réaliser ces tubes en un matériau permettant le passage de l'eau à l'intérieur des tubes, par exemple en ionomère conducteur de protons, par exemple en Nafion®. On peut envisager que certains tubes du faisceau soit en acier inox et d'autres soient en Nafion®. En variante, on peut utiliser par exemple des tubes de polymères présentant des chaine poly(styrène-co-butadiène) sulfonée.

Le circuit d'alimentation en air 10 traverse également le volume étanche V de sorte à baigner dans le caloporteur. La partie 10.1 du circuit d'alimentation 10 située dans le boîtier est en amont de l'empilement et est telle qu'elle assure à la fois un échauffement de l'air et une humidification de l'air à partir du caloporteur avant son injection dans les cellules. Par exemple, la partie 10.1 du circuit est également en ionomère conducteur de protons, de type Nafion®. Avantageusement, la partie 10.1 est également formée d'un faisceau de tubes augmentant la surface d'échange. Le gradient d'humidité assure le transfert de l'eau de l'extérieur des tubes vers l'intérieur où circule l'air. La vapeur transférée permet alors l'humidification de l'air.

Simultanément à l'humidification de l'air, a lieu une augmentation de sa température.

Avantageusement, le volume V du boitier est tel qu'il forme également un vase d'expansion 22 en ne remplissant que partiellement le volume V en caloporteur. Ceci est schématisé par la partie du volume laissée libre de caloporteur sur la figure 1A.

En partie haute du boîtier, celui-ci comporte également un orifice 24 de remplissage du circuit d'échange thermique obturable par un bouchon.

On peut prévoir également un orifice de dégazage 26 obturable du circuit d'échange thermique permettant de chasser au mieux l'air du circuit lors de son remplissage, ceci afin d'optimiser la surface d'échange entre les plaques bipolaires de la pile et le liquide de refroidissement. On peut prévoir également des moyens de sécurité 28 en cas de montée de la pression dans le circuit d'échange thermique, par exemple formé par une soupape. Il peut être prévu que la soupape soit formée dans le bouchon de l'orifice de remplissage.

De manière avantageuse, la quantité d'hydrogène injectée dans les cellules est supérieure à celle requise afin d'augmenter le rendement de la réaction d'électrolyse. L'hydrogène non consommé en sortie du circuit 8 est réinjecté dans le circuit. La pile comporte donc avantageusement un circuit 29 de réinjection de l'hydrogène dans l'empilement, celui-ci est par exemple connecté au circuit 8 en sortie de la partie 8.1 du circuit d'alimentation en hydrogène. En effet, l'hydrogène réinjecté sortant de la pile, il n'est pas nécessaire de le réchauffer et peut être réinjecté directement. On peut cependant envisager de connecter le circuit de réinjection en amont de la partie 8.1 du circuit d'alimentation en hydrogène.

Dans l'exemple représenté, le boîtier principal 20 comporte un piquage de recirculation 29.1 pour connecter le circuit de recirculation 29 au circuit d'alimentation 8.

Avantageusement, des moyens de réchauffage à froid 31 sont prévus dans le boîtier pour réchauffer le caloporteur et simultanément l'hydrogène et l'air au début du fonctionnement de la pile tant que le caloporteur n'a pas été échauffé par la chaleur dégagée par les cellules. Il s'agit par exemple de moyens électriques type résistance électrique plongés dans le caloporteur ou alors de moyens fluidiques avec un circuit d'échange thermique. Par exemple, les moyens de réchauffage à froid 31 sont activés pour une température inférieure à 5°C.

De préférence, la pile comporte des moyens de surveillance du fonctionnement de la pile. Il s'agit par exemple de moyens de mesure 30 de la température du caloporteur dans le boîtier, des moyens de contrôle 32 du niveau du caloporteur dans le boitier pour détecter par exemple une fuite et éviter une surchauffe de la pile.

En outre, le caloporteur étant directement en contact avec les plaques bipolaires, de préférence la conductivité électrique de celui-ci est surveillée, afin qu'elle ne dépasse pas un seuil donné afin préserver le rendement électrique de la pile. Dans ce cas, la pile peut comporter également des moyens de mesure 34 de la conductivité électrique du caloporteur, par exemple disposés dans le boîtier et des moyens pour réduire cette conductivité si nécessaire formés par un dispositif échangeur d'ions 36, appelé également dispositif de régénération.

Le dispositif de régénération 36 est visible schématiquement sur la figure 1B, il est disposé latéralement par rapport au boîtier principal

Dans l'exemple représenté et de manière avantageuse, ce dispositif 36 est logé dans un boîtier additionnel 38 disposé de manière adjacente au boîtier principal 20 et connecté à celui-ci directement à travers les parois adjacentes, ce qui évite de recourir à un tuyau.

Le boîtier additionnel 38 est connecté au système de gestion thermique pour réinjecter le caloporteur dans le circuit après avoir été régénéré.

De préférence, à chaque démarrage de la pile, le liquide caloporteur est automatiquement régénéré tant que la température du liquide est inférieure à 50°C. La mesure de conductivité électrique du liquide peut être utilisée comme une sécurité pour recommander l'arrêt de la pile ou pour informer des performances dégradées de celle-ci. En cas de forte dégradation de la conductivité, il peut être prévu de faire tourner la pompe de circulation sans faire fonctionner la pile, pour faire circuler le liquide dans les résines de régénération le temps de régénérer correctement le caloporteur.

Le dispositif échangeur d'ions 36 est par exemple formé par des résines de régénération. La circulation entre le boîtier principal 20 et le boîtier additionnel 38 est commandée en température afin que le caloporteur entrant au contact des résines soit à une température inférieure à une température de l'ordre 50°C, température maximale de fonctionnement des résines. Avantageusement, il s'agit d'une vanne thermostatique 40 offrant un fonctionnement simple et une structure robuste. Cependant une électrovanne commandée par les moyens de mesure de température 30 ne sort pas du cadre de la présente invention.

En variante la mesure de conductivité pourrait se faire en entrée de l'empilement et le dispositif de régénération serait situé sur la deuxième plaque d'extrémité 6.2.

Sur les figures 2 à 5 qui représentent un exemple de réalisation pratique d'une pile selon la présente invention dans lequel la compacité de l'agencement est particulièrement importante, on peut voir le boîtier principal 20 monté sur la plaque d'extrémité 6.1 et le boîtier additionnel 38 fixé sur la plaque d'extrémité 6.1 de manière adjacente au boîtier principal 20. Dans l'exemple représenté, le boîtier additionnel 38 est plus court que le boîtier principal 20, le boitier principal 20 comporte alors avantageusement une extension latérale 20.1 bordant une extrémité longitudinale du boîtier additionnel 38 et par laquelle on assure les connexions entre les deux boîtiers 20, 38 et avec l'extérieur.

La portion 8.1 du circuit d'alimentation en hydrogène et la portion 10.1 du circuit d'alimentation en air sont disposées parallèlement dans le boîtier principal 20. Chacune des portions est alimentée par une extrémité longitudinale symbolisée par les flèches 40, 42 pour l'hydrogène et l'air respectivement et est connectée en sortie aux cellules par des tuyaux 44, 46 qui se connectent à un bord de la plaque d'extrémité 6.2, la connexion avec les cellules se faisant à travers la plaque d'extrémité.

En variante, les tuyaux 44, 46 pourraient être supprimés, et les connexions entre la portion 8.1 du circuit d'alimentation en hydrogène et les cellules et entre la portion 10.1 du circuit d'alimentation en air et les cellules seraient faites directement à travers la plaque 6.1 dans le fond du boîtier principal 20.

La deuxième plaque d'extrémité 6.2 comporte des sorties 48, 50 d'hydrogène et d'air respectivement.

La sortie d'hydrogène 48 est reliée au circuit de recirculation 29.

Le boîtier principal 20 est connecté au dispositif de régénération 36 via une vanne deux voies 40 située au niveau de l'extension 20.2 commander en température, la température de commande étant la température maximale supportée par les résines de régénération, i.e. environ 50°C. De préférence, la vanne deux voies 40 est une vanne thermostatique. La vanne 40 assure la communication entre le réservoir principal et le dispositif de régénération 36 lorsque la température du caloporteur est inférieure à 50°C et l'interrompt lorsque que la température du caloporteur dépasse 50°C.

Le boîtier principale est en outre avantageusement connecté au boîtier additionnel 38 par la sortie "caloporteur froid" de la vanne trois voies. Le boîtier 38 forme alors une portion du sous-circuit 16.2.

La connexion 52 du boîtier additionnel 38 au système de gestion thermique est située dans une face latérale 38.1 du boîtier additionnel 38.

La connexion 54 munie de la vanne thermostatique trois voies 18 du boîtier principal 20 aux sous-circuits 16.1 et 16.2 est située dans l'extension 20.1.

Nous allons expliquer les trois modes de circulation :
Pour les températures inférieures à 50°C : la vanne thermostatique 40 est ouverte, le caloporteur s'écoule du réservoir principale dans le dispositif de régénération, traverse les résines et ressort du dispositif de régénération dans le réservoir additionnel 38. Le réservoir additionnel se remplit de caloporteur et celui-ci sort ensuite du boitier 38 par le piquage 52 et retourne directement à la pompe de circulation pour recirculer dans l'empilement de cellule, sans passer par le sous-circuit d'échange thermique 16.1.

Pour les températures comprises entre 50°C et 70°C : la vanne thermostatique 2 voies 40 se ferme et empêche le passage du caloporteur dans le dispositif de régénération 36 fermée. La vanne thermostatique 3 voies est ouverte vers le réservoir additionnel 38, le caloporteur noie le boîtier additionnel 38 pour ressortir par le piquage 52 et retourne directement à la pompe de circulation pour recirculer dans l'empilement de cellule, sans passer par l'échangeur thermique du sous-circuit 16.1.

Pour les températures supérieures à 70°C : la vanne thermostatique trois voies 18 est partiellement ou totalement ouverte vers le piquage 54 menant au sous-circuit 16.1, le caloporteur s'écoule dans le sous-circuit 16.1 et assure le refroidissement du caloporteur via l'échangeur thermique 17.

De manière très avantageuse, cette architecture de connexion n'utilise qu'un seul piquage 52 vers le sous-circuit 16.2. La réalisation de la pile est donc simplifiée et les risques de fuite sont réduits.

Les boîtiers 20 et 38 peuvent comporter un fond qui sera en appui sur la plaque d'extrémité 6.1. En variante, la plaque d'extrémité forme le fond de l'une ou des deux boîtiers 20et 38. Une étanchéité est alors réalisée entre les parois latérales des boîtiers et la plaque d'extrémité 6.1 par exemple au moyen de joints plats ou de joints toriques.

Le boîtier principal 20 et le boîtier additionnel 38 peuvent être réalisés d'un seul tenant.

Nous allons maintenant donner, à titre illustratif un exemple de dimensionnement d'une pile d'une puissance de 90kW telle que représentée sur les figures 2 à 5 pour un débit d'hydrogène de 60 Nm³/h et un débit d'air de 300 Nm³/h.

La largeur L de la pile est de 630 mm (figure 5).

La hauteur h du boîtier est 200 mm et la profondeur p du boîtier est 420 mm (figure 4).La hauteur totale de la pile est de l'ordre de 600mm.

Comparativement, un système pile de l'état de la technique présente une hauteur totale de 960 mm, une profondeur de 600 mm et une largeur de 710 mm.

On constate donc une réduction importante de l'encombrement obtenue grâce à la présente invention.

Grâce à la présente invention on réalise un gain de volume très important pour réaliser la fonction d'humidification, de l'ordre de 100 litres, et un gain notable pour réaliser la fonction de réchauffage, de l'ordre de 10 litres.

En outre, le nombre et le volume des tuyauteries étant réduits, l'accessibilité aux différents éléments de la pile se trouve facilitée.

Nous allons maintenant expliquer le fonctionnement de la pile selon la présente invention.

Lorsque la pile est démarrée, le caloporteur est froid et ne peut donc réchauffer l'hydrogène et l'air. Les moyens de chauffage de démarrage à froid sont mis en route, par exemple lorsque la température est inférieure à 5°C.

L'hydrogène réchauffé et éventuellement humidifié et l'air réchauffé et humidifié sont injectés dans les cellules. Simultanément le caloporteur, également réchauffé, circule dans l'empilement. Les réactions électrochimiques ont lieu dans chacune des cellules.

Le caloporteur extrait la chaleur dégagée par les cellules. Lorsque le caloporteur est suffisamment chaud pour réchauffer l'hydrogène et l'air les moyens de réchauffage à froid sont arrêtés. Le temps de réchauffage est de l'ordre de quelques minutes en fonction de la puissance électrique à fournir par le système pile. Ce temps de réchauffage est d'autant plus rapide que les circuits sont courts et donc les volumes à réchauffer faibles.

L'hydrogène qui sort des cellules est réinjecté dans le circuit.

Le caloporteur, tant que sa température est inférieure à 50°C est renvoyé directement en entrée du circuit intérieur 14, via le dispositif de régénération 36 et le réservoir additionnel 38.

Lorsque la température est comprise entre 50°C et 70°C, le caloporteur est renvoyé directement en entrée du circuit intérieur 14, via le réservoir additionnel 38 sans traverser le dispositif de régénération 36.

Lorsque sa température dépasse 70°C, la vanne thermostatique trois voies 18 réagit et change de configuration pour envoyer le caloporteur vers le sous-circuit extérieur 16.1, sans passer par le réservoir additionnel 38, muni de l'échangeur thermique afin d'abaisser sa température. Le caloporteur ainsi refroidi est réinjecté en entrée du circuit intérieur 14.

L'utilisation de vannes thermostatiques permet une gestion autonome des écoulements de caloporteur en fonction de la température du caloporteur.

En outre, sa conductivité électrique est mesurée, lorsqu'elle dépasse le seuil donné, celui-ci est envoyé dans le dispositif de régénération 36 si la température du liquide est inférieure à 50°C et est ensuite réinjecté dans le circuit d'échange thermique. Sinon, la mesure de la conductivité permet de savoir si la pile travaille dans des conditions dégradées et il est choisit d'arrêter ou non le système.

La pile à combustible selon la présente invention est particulièrement adaptée à des applications embarquées comme par exemple dans des véhicules automobiles comme source d'énergie pour l'alimentation des moteurs électriques de propulsion ou pour des applications recherchant des sources d'énergie mobiles, comme par exemple le camping, les campagnes militaires....

## Revendications

1. Pile à combustible comportant un empilement (2) de cellules électrochimiques et des première et deuxième plaques d'extrémité (6.1, 6.2) appliquant un effort de serrage sur les cellules électrochimiques, un système de gestion thermique (12), un circuit d'alimentation en gaz carburant (8) des cellules et un circuit d'alimentation en gaz comburant (10) des cellules, des moyens de chauffages des gaz carburant et comburant avant leur injection dans les cellules et des moyens d'humification du gaz comburant avant son injection dans les cellules, **caractérisée en ce que** le système de gestion thermique est formé par un circuit de circulation (14) d'un fluide caloporteur dans l'empilement (2) et un circuit de circulation (16) du caloporteur à l'extérieur de l'empilement et **en ce que** la pile comporte un boîtier (20), dit boîtier principal, monté sur la première plaque d'extrémité (6.1) et formant une volume étanche (V) en aval du circuit de circulation intérieur (14) du caloporteur dans l'empilement et dans lequel débouche le circuit de circulation intérieur (14) du caloporteur, ledit volume (V) étant destiné à être rempli au moins partiellement de caloporteur sortant de l'empilement, dans laquelle les circuits d'alimentation (8, 10) en gaz comburant et en gaz carburant traversent le volume étanche (V) et sont destinés à être immergés dans le caloporteur de sorte à échanger de la chaleur avec celui-ci et dans laquelle une portion (10.1) au moins du circuit d'alimentation en gaz comburant destiné à être immergée dans le caloporteur est apte à permettre un transfert de l'eau contenue dans le caloporteur de l'extérieur du circuit d'alimentation en gaz comburant (10.1) vers l'intérieur dudit circuit afin d'humidifier le gaz comburant.

2. Pile à combustible selon la revendication 1, dans laquelle une portion au moins du circuit d'alimentation en gaz carburant (8.1) destinée à être immergée dans le caloporteur présente un matériau offrant une bonne conductivité thermique, par exemple est en acier inoxydable.

3. Pile à combustible selon la revendication 1 ou 2, dans laquelle le circuit d'alimentation en gaz comburant (10.1) comporte une portion en ionomère conducteur de protons, par exemple en Nafion^{®}, pour permettre le passage de l'eau vers l'intérieur de ladite portion et/ou le circuit d'alimentation en gaz carburant (8.1) comporte une portion en ionomère conducteur de protons, par exemple en Nafion^{®}, pour permettre le passage de l'eau vers l'intérieur de ladite portion (8.1).

4. Pile à combustible selon l'une des revendications 1 à 3, dans laquelle les portions (8.1, 10.1) des circuits d'alimentation en gaz carburant et comburant destinées à être immergée dans le caloporteur comportent un faisceau de tubes connectés en parallèles afin d'augmenter les échanges avec le caloporteur.

5. Pile à combustible selon l'une des revendications 1 à 4, dans laquelle le volume étanche (V) est destiné à être rempli partiellement afin de ménager un vase d'expansion.

6. Pile à combustible selon l'une des revendications 1 à 5, comportant des moyens (36) de réduction de la conductivité électrique du caloporteur.

7. Pile à combustible selon la revendication 6, comportant un boîtier additionnel (38) monté sur ladite première plaque d'extrémité (6.1) à proximité du boîtier principal (20), dans lequel sont disposés les moyens (36) de réduction de la conductivité électrique, les moyens (36) de réduction de la conductivité électrique étant connectés au volume intérieur de sorte à permettre la circulation du caloporteur dans les moyens (36) de réduction de la conductivité électrique.

8. Pile à combustible selon la revendication 7, dans laquelle les moyens (36) de réduction de la conductivité électrique sont formés par des résines de régénération, une vanne (40) commandant l'écoulement du caloporteur entre le boîtier principal (20) et les résines de régénération en fonction de la température du caloporteur, la vanne (40) interrompant la communication pour une température supérieure à environ 50°C, ladite vanne (40) étant avantageusement une vanne thermostatique.

9. Pile à combustible selon l'une des revendications 1 à 8, comportant des moyens de chauffage (31) du caloporteur disposés dans le boîtier principal (20), par exemple formés par une résistance électrique.

10. Pile à combustible selon l'une des revendications 1 à 9, dans laquelle le circuit extérieur (16) comporte un premier sous-circuit (16.1) muni d'un échangeur thermique et un deuxième sous-circuit (16.2) connecté directement à l'entrée du circuit intérieur (14), un dispositif (18) pour commander la circulation du fluide caloporteur dans l'un et/ou l'autre des sous-circuits (16.1, 16.2) en fonction de la température dudit fluide à la sortie du circuit intérieur (14), ledit dispositif de commande étant avantageusement une vanne thermostatique trois voies.

11. Pile à combustible selon la revendication 9 ou 10, dans laquelle ledit dispositif de commande (18) est intégré entre le boîtier principal (20) et le boîtier additionnel (38) de sorte que le boîtier additionnel (38) forme une partie du deuxième sous-circuit (16.2).

12. Pile à combustible selon la revendication 11, comportant uniquement deux sorties pour le caloporteur, une sortie formée dans une paroi du boîtier principal (20) vers le premier sous-circuit (16.1) et une sortie dans une paroi du boîtier additionnel (38) vers le deuxième sous-circuit (16.2).

13. Pile à combustible selon l'une des revendications 1 à 12, dans laquelle le boîtier principal (20) comporte des moyens de mesure de la température (30) du caloporteur et/ou des moyens de mesure de la conductivité électrique (34) du caloporteur et/ou des moyens de contrôle du niveau de remplissage (32) du volume étanche en caloporteur.

14. Pile à combustible selon l'une des revendications 1 à 13, dans laquelle l'alimentation en gaz carburant et l'alimentation en gaz comburant des cellules se font à travers la première plaque d'extrémité (6.1, 6.2) au moyen des tuyaux (44, 46) entre le circuit d'alimentation en gaz carburant et le circuit d'alimentation en gaz comburant et une face latérale de le première plaque d'extrémité.

15. Pile à combustible selon l'une des revendications 1 à 14, la pile à combustible étant du type à membrane échangeuses de protons, le gaz carburant étant de l'hydrogène et le gaz comburant étant de l'oxygène.

## Patentansprüche

1. Brennstoffzelle, enthaltend eine Stapelung (2) von elektrochemischen Zellen und eine erste und eine zweite Endplatte (6.1, 6.2), die eine Spannkraft auf die elektrochemischen Zellen aufbringen, ein Thermokontrollsystem (12), einen Versorgungskreis zum Versorgen der Zellen mit Treibstoffgas (8) und einen Versorgungskreis zum Versorgen der Zellen mit Brennstoffgas (10), Heizmittel zum Erhitzen der Treibstoff- und der Brennstoffgase vor deren Einspritzen in die Zellen und Mittel zur Befeuchtung des Brennstoffgases vor dessen Einspritzen in die Zellen, **dadurch gekennzeichnet, dass** das Thermokontrollsystem aus einem Zirkulationskreis (14) für ein Wärmeträgermedium in der Stapelung (2) und aus einem Zirkulationskreis (16) für das Wärmeträgermedium außerhalb der Stapelung gebildet ist und dass die Brennstoffzelle ein Gehäuse (20) aufweist, Hauptgehäuse genannt, das an der ersten Endplatte (6.1) montiert ist und einen dichten Raum (V) stromabwärts des inneren Zirkulationskreises (14) für das Wärmeträgermedium in der Stapelung bildet und in welches der innere Zirkulationskreis (14) für das Wärmeträgermedium mündet, wobei der Raum (V) dazu bestimmt ist, zumindest teilweise mit dem aus der Stapelung ausströmenden Wärmeträgermedium gefüllt zu werden, wobei die Versorgungskreise (8, 10) zur Versorgung mit Brennstoffgas und Treibstoffgas durch den dichten Raum (V) hindurch strömen und dazu bestimmt sind, in das Wärmeträgermedium einzutauchen, so dass sie in Wärmeaustausch mit diesem sind, und wobei zumindest ein Abschnitt (10.1) des Versorgungskreises zur Versorgung mit Brennstoffgas, der in das Wärmeträgermedium eintauchen soll, dazu geeignet ist, einen Übergang von in dem Wärmeträgermedium enthaltenem Wasser von außerhalb des Versorgungskreises zur Versorgung mit Brennstoffgas (10.1) nach innerhalb des Kreises zu gestatten, um das Brennstoffgas zu befeuchten.

2. Brennstoffzelle nach Anspruch 1, wobei zumindest ein Abschnitt des Versorgungskreises zur Versorgung mit Treibstoffgas (8.1), der dazu bestimmt ist, in das Wärmeträgermedium einzutauchen, ein Material aufweist, das eine gute Wärmeleitfähigkeit bietet, beispielsweise aus rostfreiem Stahl besteht.

3. Brennstoffzelle nach Anspruch 1 oder 2, wobei der Versorgungskreis zur Versorgung mit Brennstoffgas (10.1) einen Abschnitt aus protonenleitendem lonomer aufweist, beispielsweise aus Nafion®, um den Durchfluss von Wasser nach innerhalb des Abschnitts zu gestatten, und/oder der Versorgungskreis zur Versorgung mit Treibstoffgas (8.1) einen Abschnitt aus protonenleitendem lonomer aufweist, beispielsweise aus Nafion®, um den Durchfluss von Wasser nach innerhalb des Abschnitts (8.1) zu gestatten.

4. Brennstoffzelle nach einem der Ansprüche 1 bis 3, wobei die Abschnitte (8.1, 10.1) der Versorgungskreise zur Versorgung mit Treibstoffgas bzw. mit Brennstoffgas, die dazu bestimmt sind, in das Wärmeträgermedium einzutauchen, ein Bündel von parallel verbundenen Rohren aufweisen, um den Austausch mit dem Wärmeträgermedium zu erhöhen.

5. Brennstoffzelle nach einem der Ansprüche 1 bis 4, wobei der dichte Raum (V) dazu bestimmt ist, teilweise gefüllt zu werden, um ein Expansionsgefäß zu bilden.

6. Brennstoffzelle nach einem der Ansprüche 1 bis 5, enthaltend Mittel (36) zur Verminderung der elektrischen Leitfähigkeit des Wärmeträgermediums.

7. Brennstoffzelle nach Anspruch 6, enthaltend ein zusätzliches Gehäuse (38), das an der ersten Endplatte (6.1) in der Nähe des Hauptgehäuses (20) montiert ist und in welchem die Mittel (36) zur Verminderung der elektrischen Leitfähigkeit angeordnet sind, wobei die Mittel (36) zur Verminderung der elektrischen Leitfähigkeit mit dem Innenraum so verbunden sind, dass sie die Zirkulation des Wärmeträgermediums in den Mitteln (36) zur Verminderung der elektrischen Leitfähigkeit gestatten.

8. Brennstoffzelle nach Anspruch 7, wobei die Mittel (36) zur Verminderung der elektrischen Leitfähigkeit aus Regenerationsharzen gebildet sind, wobei ein Ventil (40) das Strömen des Wärmeträgermediums zwischen dem Hauptgehäuse (20) und den Regenerationsharzen in Abhängigkeit von der Temperatur des Wärmeträgermediums steuert, wobei das Ventil (40) bei einer Temperatur höher als etwa 50 °C die Verbindung unterbricht, wobei das Ventil (40) vorteilhaft ein Thermostatventil ist.

9. Brennstoffzelle nach einem der Ansprüche 1 bis 8, enthaltend Heizmittel (31) für das Wärmeträgermedium, die in dem Hauptgehäuse (20) angeordnet sind und beispielsweise aus einem elektrischen Widerstand gebildet sind.

10. Brennstoffzelle nach einem der Ansprüche 1 bis 9, wobei der Außenkreis (16) einen ersten Teilkreis (16.1) aufweist, der mit einem Wärmetauscher versehen ist, sowie einen zweiten Teilkreis (16.2), der direkt mit dem Einlass des Innenkreises (14) verbunden ist, und eine Vorrichtung (18) zum Steuern der Zirkulation des Wärmeträgermediums in dem einen und/oder dem anderen der Teilkreise (16.1, 16.2) in Abhängigkeit von der Temperatur des Wärmeträgermediums am Auslass des Innenkreises (14), wobei die Steuervorrichtung vorteilhaft ein Dreiwege-Thermostatventil ist.

11. Brennstoffzelle nach Anspruch 9 oder 10, wobei die Steuervorrichtung (18) zwischen Hauptgehäuse (20) und Zusatzgehäuse (38) angeordnet ist, so dass das Zusatzgehäuse (38) einen Teil des zweiten Teilkreises (16.2) bildet.

12. Brennstoffzelle nach Anspruch 11, enthaltend nur zwei Auslässe für das Wärmeträgermedium, wobei ein Auslass in einer Wand des Hauptgehäuses (20) zum ersten Teilkreis (16.1) hin und ein Auslass in einer Wand des Zusatzgehäuses (38) zum zweiten Teilkreises (16.2) hin ausgebildet ist.

13. Brennstoffzelle nach einem der Ansprüche 1 bis 12, wobei das Hauptgehäuse (20) Messmittel (30) zum Messen der Temperatur des Wärmeträgermediums und/oder Messmittel (34) zum Messen der elektrischen Leitfähigkeit des Wärmeträgermediums und/oder Kontrollmittel (32) zum Kontrollieren des Füllstands des dichten Raums mit Wärmeträgermedium enthält.

14. Brennstoffzelle nach einem der Ansprüche 1 bis 13, wobei die Versorgung der Zellen mit Treibstoffgas und die Versorgung mit Brennstoffgas durch die erste Endplatte (6.1, 6.2) hindurch über Rohrleitungen (44, 46) zwischen dem Versorgungskreis zur Versorgung mit Treibstoffgas und dem Versorgungskreis zur Versorgung mit Brennstoffgas und einer Seitenfläche der ersten Endplatte erfolgen.

15. Brennstoffzelle nach einem der Ansprüche 1 bis 14, wobei die Brennstoffzelle mit einer Protonen-Austausch-Membran ausgeführt ist, wobei das Treibstoffgas Wasserstoff und das Brennstoffgas Sauerstoff ist.

## Claims

1. A fuel cell comprising a stack (2) of electrochemical cells and first and second end plates (6.1, 6.2) applying a tightening strain on the electrochemical cells, a heat management system (12), a circuit (8) for supplying fuel gas to the cells and a circuit (10) for supplying an oxidizing gas (10) to the cells, means for heating the fuel and oxidizing gases before they are injected into the cells and means for humidifying the oxidizing gas before it is injected into the cells, **characterized in that** the heat management system (12) is formed by a circuit (14) for flowing a coolant inside the stack (2) and a circuit (16) for flowing the coolant outside the stack and **in that** the fuel cell comprises a so-called main casing (20), mounted to the first end plate (6.1) and forming a tight volume (V) downstream of the inside circuit (14) for flowing the coolant in the stack and wherein emerges the inside circuit (14) for flowing the coolant, said volume (V) being configured to be at least partially filled with the coolant flowing out of the stack, wherein the circuits (8, 10) for supplying the oxidizing gas and fuel gas pass through the tight volume (V) and are configured to be dipped into the coolant so as to exchange heat with the same and wherein at least one portion (10.1) of the circuit for supplying the oxidizing gas configured to be dipped into the coolant is able to allow water contained in the coolant to be transferred from outside of the circuit for supplying the oxidizing gas (10.1) to the inside of said circuit in order to humidify the oxidizing gas.

2. The fuel cell according to claim 1, wherein at least one portion of the circuit (8.1) for supplying the fuel gas intended to be dipped into the coolant has a material exhibiting a good thermal conductivity, for example is of stainless steel.

3. The fuel cell according to claim 1, wherein the circuit (10.1) for supplying oxidizing gas comprises a proton conductor ionomer portion, for example of Nafion®, to enable water to pass into said portion or/and the circuit (8.1) for supplying the fuel gas comprises a proton conductor ionomer portion, for example of Nafion®, to enable water to pass into said portion (8.1).

4. The fuel cell according to one of claims 1 to 3, wherein the portions (8.1, 10.1) of the circuits for supplying fuel gas and oxidizing gas intended to be dipped into the coolant comprise a parallel connected tube bundle in order to enhance exchanges with the coolant.

5. The fuel cell according to any of claims 1 to 4, wherein the tight volume (V) is intended to be partially filled in order to provide for an expansion vessel.

6. The fuel cell according to one of claims 1 to 5, comprising means (36) for decreasing the electrical conductivity of the coolant.

7. The fuel cell according to claim 6, comprising an additional casing (38) mounted to said first end plate (6.1) in the vicinity of the main casing (20), wherein are provided the means (36) for decreasing the electrical conductivity, the means (36) for decreasing the electrical conductivity being connected to the inner volume so as to enable the coolant to flow into the means (36) for decreasing the electrical conductivity.

8. The fuel cell according to claim 7, wherein the means (36) for decreasing the electrical conductivity are formed by regenerating resins, a valve (40) controlling the flow of the coolant between the main casing (20) and the regenerating resins in dependence on the coolant temperature, the valve (40) disrupting the communication for a temperature higher than about 50°C, said valve (40) being advantageously a thermostatic valve.

9. The fuel cell according to one of claims 1 to 8, comprising means (31) for heating the coolant which are provided in the main casing (20), for example formed by an electrical resistor.

10. The fuel cell according to one of claims 1 to 10, wherein the outside circuit (16) comprises a first sub-circuit (16.1) provided with a heat exchanger and a second sub-circuit (16.2) directly connected to the inlet of the inside circuit (14), a device (18) for controlling the flow of the coolant in either or both sub-circuits (16.1, 16.2) in dependence of the temperature of said coolant at the outlet of the inside circuit (14), said control device being advantageously a three-way thermostatic valve.

11. The fuel cell according to claim 9 or 10, wherein said control device (18) is integrated between the main casing (20) and the additional casing (38) such that the additional casing (16) is part of the second sub-circuit (16.2).

12. The fuel cell according to claim 11, only comprising two outlets for the coolant, one outlet formed in a wall of the main casing (20) towards the first sub-circuit (16.1) and one outlet in a wall of the additional casing (38) towards the second sub-circuit (16.2).

13. The fuel cell according to one of claims 1 to 12, wherein the main casing (20) comprises means (30) for measuring the temperature of the coolant and/or means (34) for measuring the electrical conductivity of the coolant and/or means (32) for monitoring the coolant filling level of the tight volume.

14. The fuel cell according to one of claims 1 to 13, wherein the fuel gas supply and the oxidizing gas supply for the cells are made through the first end plate (6.1, 6.2) by means of the pipes (44, 46) between the fuel gas supply circuit and the oxidizing gas supply circuit and a side face of the first end plate.

15. The fuel cell according to one of claims 1 to 14, wherein the fuel cell is of the proton exchange membrane type, the fuel gas is hydrogen and the oxidizing gas is oxygen.
